# EUROPÄISCHE PATENTANMELDUNG

(11) **EP 3 530 520 A1**
(43) Veröffentlichungstag der Anmeldung: **28.08.2019**
(21) Anmeldenummer: 18158355.0
(22) Anmeldetag: 23.02.2018
(51) Int. Cl.: B60Q 11/00, H04N 9/31

(54) **LICHTMODUL FÜR EINEN KRAFTFAHRZEUGSCHEINWERFER**

(71) Anmelder: ZKW Group GmbH, 3250 Wieselburg (AT)
(72) Erfinder: Plank, Josef, 3251 Purgstall/Erlauf (AT); Lahmer, Martin, 3662 Münichreith (AT); Pürstinger, Josef, 4540 Bad Hall (AT); Danner, Markus, 2252 Ollersdorf (AT)
(74) Vertreter: Patentanwaltskanzlei Matschnig & Forsthuber OG

(57) **Zusammenfassung**

Lichtmodul für einen Kraftfahrzeugscheinwerfer, umfassend zumindest ein in Hauptabstrahlrichtung eines ersten Leuchtmittels (110) angeordnetes optoelektronisches Bauteil (300), welches eine steuerbare Anordnung von mehreren Mikrospiegeln (310) umfasst, und in eine erste und eine zweite Stellung verschwenkbar sind, wobei Mikrospiegel (310), die sich in der ersten Stellung befinden, Lichtstrahlen auf zumindest eine Projektionsoptik (400) umlenken, welche eingerichtet ist, eine Lichtverteilung zu erzeugen, und Mikrospiegel (310), die sich in der zweiten Stellung befinden, Lichtstrahlen auf einen Lichtstrahlen absorbierenden Absorber (500) umlenken, und wobei das Lichtmodul ferner zumindest eine Steuereinrichtung (200), ein Sensormittel (600) und ein zweites Leuchtmittel (120) umfasst, wobei die Steuereinrichtung (200) eingerichtet ist, das Sensormittel (600) und das zweite Leuchtmittel (120) anzusteuern, und wobei Mikrospiegel (310), welche sich in der ersten Stellung befinden, die von dem zweiten Leuchtmittel (120) emittierbaren Lichtstrahlen auf das Sensormittel (600) umlenken, wobei das Sensormittel (600) eingerichtet ist, Lichtstrahlen des zweiten Leuchtmittels (120) zu erfassen, um einen Wert zu erhalten, und diesen Wert an die Steuereinrichtung (200) zu übermitteln, welche den Wert mit einem in einem Speicher gespeicherten Schwellenwert vergleicht, wobei ein Einschalten des ersten Leuchtmittels (110) bei Erreichen des Schwellenwertes verhindert oder das erste Leuchtmittel (110) bei Unterschreiten des Schwellenwertes eingeschalten wird.

## Beschreibung

Die Erfindung betrifft ein Lichtmodul für einen Kraftfahrzeugscheinwerfer, umfassend zumindest ein in Hauptabstrahlrichtung eines ersten Leuchtmittels angeordnetes optoelektronisches Bauteil, welches eine steuerbare Anordnung von mehreren Mikrospiegeln umfasst, welche Mikrospiegel in Form einer zweidimensionalen Matrix mit Zeilen und Spalten angeordnet sind und unabhängig voneinander in eine erste und eine zweite Stellung verschwenkbar sind,
wobei Mikrospiegel, die sich in der ersten Stellung befinden, Lichtstrahlen, die von dem ersten Leuchtmittel emittiert werden, auf zumindest eine Projektionsoptik umlenken, welche zumindest eine Projektionsoptik eingerichtet ist, eine Lichtverteilung oder einen Teil einer Lichtverteilung einer Lichtfunktion zu erzeugen,
und Mikrospiegel, die sich in der zweiten Stellung befinden, Lichtstrahlen, die von dem ersten Leuchtmittel emittiert werden, auf einen Lichtstrahlen absorbierenden Absorber umlenken,
und wobei das Lichtmodul ferner zumindest eine Steuereinrichtung aufweist, welche eingerichtet ist, das erste Leuchtmittel und die Mikrospiegel des optoelektronischen Bauteils anzusteuern.

Ferner betrifft die Erfindung einen Kraftfahrzeugscheinwerfer, umfassend zumindest ein erfindungsgemäßes Lichtmodul.

Schließlich betrifft die Erfindung ein Verfahren zur Fehlerüberprüfung eines erfindungsgemäßen Lichtmoduls.

Bei der Entwicklung der gegenwärtigen Scheinwerfersysteme steht immer mehr der Wunsch im Vordergrund, ein möglichst hochaufgelöstes Lichtbild auf die Fahrbahn projizieren zu können, welches schnell geändert und den jeweiligen Verkehrs-, Straßen- und Lichtbedingungen angepasst werden kann.

Der Begriff "Fahrbahn" wird hier zur vereinfachten Darstellung verwendet, denn selbstverständlich hängt es von den örtlichen Gegebenheiten ab, ob sich ein Lichtbild tatsächlich auf der Fahrbahn befindet oder sich darüber hinaus erstreckt, beispielsweise auf den Fahrbahnrand.

Prinzipiell wird das Lichtbild anhand einer Projektion auf eine vertikale Fläche entsprechend der einschlägigen Normen, die sich auf die KFZ-Beleuchtungstechnik beziehen, beschrieben, wobei eine variabel ansteuerbare Reflektorfläche aus einer Mehrzahl von Mikrospiegeln gebildet ist und von einem ersten Leuchtmittel emittierende Lichtstrahlen in eine Abstrahlrichtung des Scheinwerfers reflektiert.

Dabei sind beliebige Lichtfunktionen mit unterschiedlichen Lichtverteilungen realisierbar, wie beispielsweise eine Abblendlicht-Lichtverteilung, eine Abbiegelicht-Lichtverteilung, eine Stadtlicht-Lichtverteilung, eine Autobahnlicht-Lichtverteilung, eine Kurvenlicht-Lichtverteilung, eine Fernlicht-Lichtverteilung oder die Abbildung von blendfreiem Fernlicht. Weiters können auch Symbolprojektionen erfolgen, wie zum Beispiel Gefahrensymbole, Navigationspfeile, Herstellerlogos oder Ähnliches.

Für die Mikrospiegelanordnung kommt vorzugsweise die sogenannte "Digital Light Processing"-Projektionstechnik - kurz DLP genannt - zum Einsatz, bei der Bilder dadurch erzeugt werden, dass ein digitales Bild auf einen Lichtstrahl aufmoduliert wird. Dabei wird durch eine rechteckige Anordnung von beweglichen Mikrospiegeln, auch als Pixel bezeichnet, der Lichtstrahl in Teilbereiche zerlegt und anschließend pixelweise entweder in den Projektionsweg hinein oder aus dem Projektionsweg hinaus reflektiert bzw. umgelenkt.

Basis für diese Technik bildet vorzugsweise ein optoelektronisches Bauteil, das die rechteckige Anordnung in Form einer Matrix von Mikrospiegeln und deren Ansteuerungstechnik enthält, beispielsweise ein "Digital Micromirror Device" - kurz DMD genannt.

Bei einem DMD-Mikrosystem handelt es sich um einen Flächenlichtmodulator (Spatial Light Modulator, SLM), der aus matrixförmig angeordneten Mikrospiegelaktoren, d.h. verkippbaren bzw. verschwenkbaren spiegelnden Flächen besteht, beispielsweise mit einer Kantenlänge von etwa 7 µm. Die Spiegelflächen sind derart konstruiert, dass sie durch die Einwirkung elektrostatischer Felder beweglich sind.

Jeder Mikrospiegel ist im Winkel einzeln verstellbar und weist in der Regel zwei stabile Endzustände auf, zwischen denen beispielsweise innerhalb einer Sekunde bis zu 5000 Mal gewechselt werden kann.

Die Anzahl der Mikrospiegel entspricht der Auflösung des projizierten Bildes, wobei ein Mikrospiegel ein oder mehrere Pixel darstellen kann. Mittlerweile sind DMD-Chips mit hohen Auflösungen im Megapixel-Bereich erhältlich.

Bei derzeit eingesetzten Kraftfahrzeugscheinwerfern kann die erzeugte Lichtverteilung, beispielsweise für ein blendfreies Fernlicht, derart dynamisch gesteuert werden, dass entgegenkommende Fahrzeuge detektiert werden und die beispielsweise durch eine Matrix aus LED-Lichtquellen erzeugte Lichtverteilung in Richtung des entgegenkommenden Fahrzeuges abgedunkelt wird.

Für hochauflösende Kraftfahrzeugscheinwerfersysteme sollen in Zukunft DMDs zum Einsatz kommen. Aufgrund des internen Aufbaus des DMD-Bauteils ist eine Rückmeldung über die tatsächliche Stellung der Pixel, beispielsweise die erste und die zweite Stellung, nicht möglich.

Für die Anwendung in Kraftfahrzeugscheinwerfern sind hohe Anforderungen hinsichtlich einer Blendung des Gegenverkehrs oder von vorausfahrenden Fahrzeugen gegeben. Aus diesem Grund gilt es im Rahmen einer Risikobewertung abzuschätzen, wie groß das Risiko ist, dass Pixel in einer fehlerhaften Position stecken bleiben und möglicherweise eine Überwachung über fehlerhafte Pixel bzw. Mikrospiegel zu erfolgen hat. Die heutzutage verfügbaren DMD-Bauteile bieten jedoch keine direkte Möglichkeit, die Stellungen der Mikrospiegel zu erfassen, um eine potentielle Fehlstellung zu erkennen.

Da die mögliche Blendung anderer Verkehrsteilnehmer ein potentielles Sicherheitsrisiko ist, sind vor allem Mikrospiegel bzw. Pixel, die in der ersten Stellung stecken bleiben, als kritisch zu betrachten. Je nach Aufbau des Systems könnte bereits ein einziges Pixel zur Überschreitung der Blendwerte führen.

Es ist eine Aufgabe der Erfindung, ein verbessertes Lichtmodul bereitzustellen, das eine Überprüfung der Stellungen der jeweiligen Mikrospiegel eines optoelektronischen Bauteils ermöglicht.

Diese Aufgabe wird dadurch gelöst, dass das Lichtmodul ferner ein Sensormittel und ein zweites Leuchtmittel umfasst, wobei die Steuereinrichtung eingerichtet ist, das Sensormittel und das zweite Leuchtmittel anzusteuern,
und wobei Mikrospiegel, welche sich in der ersten Stellung befinden, die von dem zweiten Leuchtmittel emittierbaren Lichtstrahlen auf das Sensormittel umlenken, und Mikrospiegel, welche sich in der zweiten Stellung befinden, die von dem zweiten Leuchtmittel emittierbaren Lichtstrahlen auf den Absorber umlenken,
wobei das Sensormittel eingerichtet ist, die von dem optoelektronischen Bauteil auf das Sensormittel umgelenkten Lichtstrahlen des zweiten Leuchtmittels zu erfassen, um einen Wert zu erhalten, und diesen Wert an die Steuereinrichtung zu übermitteln, welche Steuereinrichtung den Wert mit einem in einem Speicher gespeicherten, vordefinierten Schwellenwert vergleicht, wobei die Steuereinrichtung ein Einschalten des ersten Leuchtmittels bei Erreichen des vordefinierten Schwellenwertes verhindert oder das erste Leuchtmittel bei Unterschreiten des vordefinierten Schwellenwertes einschaltet.

Dadurch ist es möglich, selbst einen einzigen Mikrospiegel, welcher sich in einer Fehlstellung befindet, zu erfassen, da nicht die sich in einer korrekten Stellung befindenden Mikrospiegel überprüft werden. Beispielsweise wäre eine Erfassung der Lichtstrahlen des ersten Leuchtmittels an dem Absorber prinzipiell möglich, beispielsweise durch einen Kamerachip, dabei kann es jedoch zu einer Überlagerung sowie zu sehr starken Überstrahlen zwischen den Pixeln des Kamerachips kommen, sodass ein einzelner Mikrospiegel in einer Fehlstellung nicht erkannt werden kann.

Auch anhand des Lichtstromes ist keine sichere Detektion möglich, da beispielsweise bei einer Auflösung von 400.000 Pixel ein fehlerhaftes Pixel lediglich eine Verringerung des Lichtstromes um 0,00025% bewirken würde und deshalb nicht messbar ist.

Es kann vorgesehen sein, dass das Sensormittel die gesamte Fläche des optoelektronischen Bauteils erfassen kann. Die Größe des Sensormittels ergibt sich aus den entsprechenden Winkeln des Lichtkegels.

Es kann vorgesehen sein, dass das Sensormittel in einem eingebauten Zustand des Lichtmoduls in einem Kraftfahrzeugscheinwerfer über der Projektionsoptik angeordnet ist.

Weiters kann vorgesehen sein, dass das Sensormittel gegen Streulicht abgeschattet ist.

Vorteilhafterweise kann vorgesehen sein, dass in Hauptabstrahlrichtung des ersten und des zweiten Leuchtmittels je zumindest eine Vorsatzoptik angeordnet ist, welche eingerichtet ist, die Lichtstrahlen des jeweiligen Leuchtmittels zu kollimieren.

Beispielsweise kann bei einem Einsatz von LED-Lichtquellen eine TIR-Linse als Vorsatzoptik eingesetzt werden.

Unter "Hauptabstrahlrichtung" ist die Richtung zu verstehen, in der das erste Leuchtmittel infolge seiner Richtwirkung am stärksten bzw. am meisten Licht abstrahlt.

Es kann vorgesehen sein, dass das erste und/oder das zweite Leuchtmittel zumindest eine Lichtquelle aufweisen, wobei die zumindest eine Lichtquelle als LED oder als Laserlichtquelle, vorzugsweise eine Laserdiode, mit einem Lichtkonversionselement ausgebildet ist.

Vorzugsweise ist vorgesehen, dass im Fall, dass zwei oder mehr Leuchtdioden vorgesehen sind, jede Leuchtdiode unabhängig von den anderen Leuchtdioden angesteuert werden kann.

Jede Leuchtdiode kann somit unabhängig von den anderen Leuchtdioden einer Lichtquelle ein- und ausgeschaltet werden, und vorzugsweise, wenn es sich um dimmbare Leuchtdioden handelt, auch unabhängig von den anderen Leuchtdioden der Lichtquelle gedimmt werden.

Da Lasereinrichtungen in der Regel kohärentes, monochromatisches Licht bzw. Licht in einem engen Wellenlängenbereich abstrahlen, aber bei einem Kraftfahrzeugscheinwerfer im Allgemeinen für das abgestrahlte Licht weißes Mischlicht bevorzugt bzw. gesetzlich vorgeschrieben ist, sind in Abstrahlrichtung der Lasereinrichtung sogenannte Lichtkonversionselemente zur Umwandlung von im Wesentlichen monochromatischem Licht in weißes bzw. polychromatisches Licht angeordnet, wobei unter "weißes Licht" Licht einer solchen Spektralzusammensetzung verstanden wird, welches beim Menschen den Farbeindruck "weiß" hervorruft. Dieses Lichtkonversionselement ist zum Beispiel in Form eines oder mehrerer Photolumineszenzkonverter bzw. Photolumineszenzelemente ausgebildet, wobei einfallende Laserstrahlen der Lasereinrichtung auf das in der Regel Photolumineszenzfarbstoff aufweisende Lichtkonversionselement auftreffen und diesen Photolumineszenzfarbstoff zur Photolumineszenz anregen, und dabei Licht in einer dem Licht der einstrahlenden Lasereinrichtung verschiedenen Wellenlänge bzw. Wellenlängenbereiche abgibt. Die Lichtabgabe des Lichtkonversionselements weist dabei im Wesentlichen Charakteristiken eines Lambert'schen Strahlers auf.

Bei Lichtkonversionselementen wird zwischen reflektiven und transmissiven Konversionselementen unterschieden.

Die Begriffe "reflektiv" und "transmissiv" beziehen sich hierbei auf den Blauanteil des konvertierten weißen Lichts. Bei einem transmissiven Aufbau ist die Hauptausbreitungsrichtung des Blaulichtanteils nach dem Durchtritt durch das Konvertervolumen bzw. Konversionselements im Wesentlichen gleichgerichtet zur Ausbreitungsrichtung des Ausgangslaserstrahls. Bei einem reflektiven Aufbau wird der Laserstrahl an einer dem Konversionselement zurechenbaren Grenzfläche reflektiert bzw. umgelenkt, sodass der Blaulichtanteil eine andere Ausbreitungsrichtung aufweist als der Laserstrahl, welcher in der Regel als blauer Laserstrahl ausgeführt ist.

Vorteilhafterweise kann das optoelektronische Bauteil als DMD ausgebildet sein.

In einer praxisgerechten Ausführungsform kann vorgesehen sein, dass das Sensormittel als lichtsensitiver CCD-Sensor ausgebildet ist.

Es kann vorgesehen sein, dass das Sensormittel über oder unter der zumindest einen Projektionsoptik in dem Lichtmodul angeordnet ist.

Die Begriffe "über" und "unter" beziehen sich jeweils auf ein Lichtmodul in einem eingebauten Zustand in einem Kraftfahrzeug.

Dabei spannen das erste Leuchtmittel, die zumindest eine Projektionsoptik und ein Mikrospiegel eine fiktive erste Ebene auf, und das zweite Leuchtmittel, das Sensormittel und der gleiche Mikrospiegel eine zweite fiktive Ebene auf, wobei die erste Ebene zu der zweiten Ebene verkippt sein kann, wobei die Schnittgerade durch den Mikrospiegel bzw. das optoelektronische Bauteil verläuft. Durch eine derartige Verkippung kann sich das Sensormittel über oder unter der zumindest einen Projektionsoptik befinden.

Es kann auch vorgesehen sein, dass die erste und die zweite Ebene zueinander verkippt und/oder verdreht sind.

Das gegenständliche Lichtmodul kann auch zur Erzeugung einer Abblendlichtverteilung und/oder Fernlichtverteilung vorgesehen sein, insbesondere zur dynamischen Lichtanpassung einer Abblendlichtverteilung und/oder einer Fernlichtverteilung, beispielsweise um ein entgegenkommendes und/oder vorausfahrendes Fahrzeug nicht zu blenden.

Wie bereits in der Einleitung erwähnt, betrifft die Erfindung überdies ein Verfahren zur Fehlerüberprüfung eines Lichtmoduls für einen Kraftfahrzeugscheinwerfer, umfassend folgende Schritte:
a) Bereitstellen eines Sensormittels und eines zweiten Leuchtmittels, wobei die zumindest eine Steuereinrichtung eingerichtet ist, das Sensormittel und das zweite Leuchtmittel anzusteuern,
b) Ansteuern der Mikrospiegel mittels der zumindest einen Steuereinrichtung, um die Mikrospiegel in die zweite Stellung zu bewegen,
c) Einschalten des zweiten Leuchtmittels, wobei Mikrospiegel, welche sich in der ersten Stellung befinden, die von dem zweiten Leuchtmittel emittierten Lichtstrahlen auf das Sensormittel umlenken, und Mikrospiegel, welche sich in der zweiten Stellung befinden, die von dem zweiten Leuchtmittel emittierten Lichtstrahlen auf den Absorber umlenken,
d) Erfassen der Lichtstrahlen des zweiten Leuchtmittels, welche Lichtstrahlen durch sich in der ersten Stellung befindende Mikrospiegel umgelenkt werden, mittels dem Sensormittel, um einen Wert zu erhalten, beispielsweise einen Helligkeitswert,
e) Übermitteln des von dem Sensormittel erfassten Wertes an die Steuereinrichtung, wobei die Steuereinrichtung den übermittelten Wert mit einem in einem Speicher gespeicherten, vordefinierten Schwellenwert vergleicht,
f) Einschalten des ersten Leuchtmittels mittels der Steuereinrichtung bei Unterschreiten des vordefinierten Schwellenwertes
   oder
g) Verhindern des Einschaltens des ersten Leuchtmittels durch die Steuereinrichtung bei Erreichen des vordefinierten Schwellenwertes.

Nachfolgend wird die Erfindung anhand von beispielhaften Zeichnungen näher erläutert. Hierbei zeigt
Fig. 1 ein Lichtmodul des Standes der Technik mit einem Mikrospiegel aufweisenden optoelektronischen Bauteil, einem ersten Leuchtmittel, einer Steuereinrichtung, einem Absorber und einer Projektionsoptik,
Fig. 2 eine Detailansicht einer Draufsicht eines Mikrospiegels des Lichtmoduls aus Fig. 1, welcher Mikrospiegel sich in einer ersten Stellung befindet,
Fig. 3 eine Detailansicht einer Draufsicht eines Mikrospiegels des Lichtmoduls aus Fig. 1, welcher Mikrospiegel sich in einer zweiten Stellung befindet,
Fig. 4 ein beispielhaftes Lichtmodul, welches zusätzlich zum Lichtmodul aus Fig.1 ein zweites Leuchtmittel und ein Sensormittel umfasst,
Fig. 5 eine Detailansicht einer Draufsicht eines Mikrospiegels des Lichtmoduls aus Fig. 4, welcher Mikrospiegel sich in einer ersten Stellung befindet,
Fig. 6 eine Detailansicht einer Draufsicht eines Mikrospiegels des Lichtmoduls aus Fig. 4, welcher Mikrospiegel sich in einer zweiten Stellung befindet,
Fig. 7 eine skizzenhafte Darstellung von durch eine Vorsatzoptik kollimierten und unterschiedlich geführten Lichtstrahlen, welche durch unterschiedlich positionierte Mikrospiegel eines optoelektronischen Bauteils umgelenkt werden, und
Fig. 8 ein Blockschaltbild eines beispielhaften Verfahrens zu Fehlerüberprüfung eines Lichtmoduls.

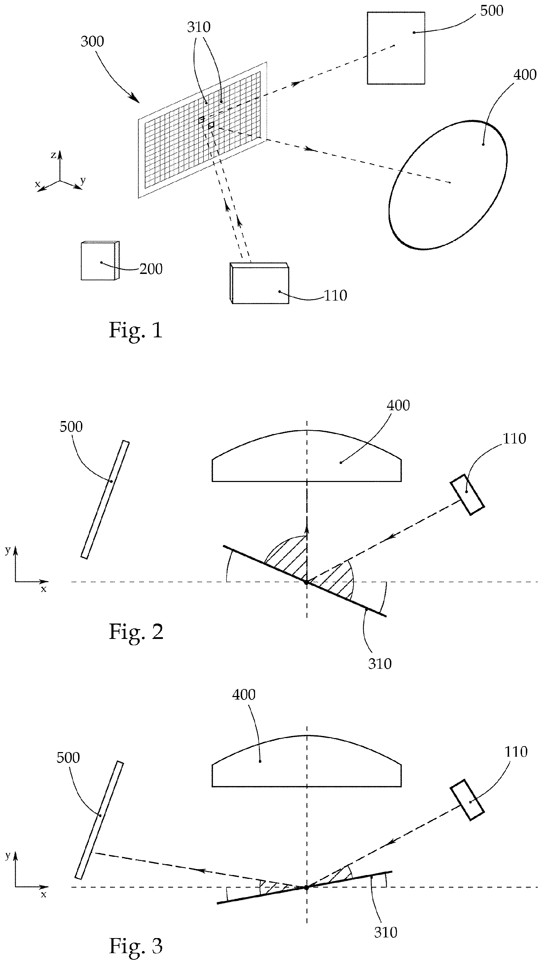

**Fig. 1** zeigt ein Lichtmodul, beispielsweise für einen Kraftfahrzeugscheinwerfer, aus dem Stand der Technik, welches Lichtmodul zumindest ein in Hauptabstrahlrichtung eines ersten Leuchtmittels **110** angeordnetes optoelektronisches Bauteil **300**, welches eine steuerbare Anordnung von mehreren Mikrospiegeln **310** umfasst, welche Mikrospiegel **310** in Form einer zweidimensionalen Matrix mit Zeilen und Spalten angeordnet sind und unabhängig voneinander in eine erste und eine zweite Stellung verschwenkbar sind, umfasst.

Das optoelektronische Bauteil **300** ist in den gezeigten Beispielen als DMD (Digital Mirror Device) ausgebildet.

Unter dem Begriff "Hauptabstrahlrichtung" ist die Richtung zu verstehen, in der das erste Leuchtmittel infolge seiner Richtwirkung am stärksten bzw. am meisten Licht abstrahlt.

Ferner lenken Mikrospiegel **310**, die sich in der ersten Stellung befinden, Lichtstrahlen, die von dem ersten Leuchtmittel **110** emittiert werden, auf zumindest eine Projektionsoptik **400** um, wobei die zumindest eine Projektionsoptik **400** eingerichtet ist, eine Lichtverteilung oder einen Teil einer Lichtverteilung einer Lichtfunktion zu erzeugen, beispielsweise einer Abblendlichtfunktion und/oder einer Fernlichtfunktion.

Das Leuchtmodul erzeugt bei der Lichtfunktion "Abblendlicht" eine Lichtverteilung, welche in einem eingebauten Zustand des Lichtmoduls in ein Fahrzeug, vor dem Fahrzeug in Fahrtrichtung eine den gesetzlichen Anforderungen entsprechende Abblendlichtverteilung erzeugt.

Das Leuchtmodul erzeugt bei der Lichtfunktion "Fernlicht" eine Lichtverteilung, welche in einem eingebauten Zustand des Lichtmoduls in ein Fahrzeug, vor dem Fahrzeug in Fahrtrichtung eine den gesetzlichen Anforderungen entsprechende Fernlichtverteilung erzeugt.

Der Begriff "Fahrtrichtung" bezeichnet in diesem Kontext die Richtung, in der sich ein angetriebenes Kraftfahrzeug wie konstruktiv vorgesehen bewegt. Ein technisch mögliches Rückwärtsfahren wird in diesem Zusammenhang nicht als Fahrtrichtung definiert.

Die oben genannten, aufgezählten Lichtfunktionen bzw. Lichtverteilungen sind nicht abschließend, wobei die Beleuchtungsvorrichtung auch Kombinationen dieser Lichtfunktionen erzeugen kann und/oder nur eine Teillichtverteilung erzeugt, also beispielsweise nur einen Teil einer Fern-, Abblend-, Nebel- oder Tagfahrlichtverteilung.

Weiters lenken Mikrospiegel **310**, die sich in der zweiten Stellung befinden, Lichtstrahlen, die von dem ersten Leuchtmittel **110** emittiert werden, auf einen Lichtstrahlen absorbierenden Absorber **500** um.

Überdies weist das Lichtmodul zumindest eine Steuereinrichtung **200** auf, welche eingerichtet ist, das erste Leuchtmittel **110** und die Mikrospiegel **310** des optoelektronischen Bauteils **300** anzusteuern, beispielsweise um das erste Leuchtmittel ein- bzw. auszuschalten.

**Fig. 2** zeigt eine Ansicht von oben bzw. in Richtung der z-Achse, welches ebenfalls in **Fig. 2** eingezeichnet ist, der Anordnung des Lichtmoduls aus **Fig. 1**, wobei ein exemplarischer Mikrospiegel **310** des optoelektronischen Bauteils **300** in einer Detailansicht dargestellt ist.

Es sei angemerkt, dass die in den Figuren eingezeichneten Koordinatensysteme und auch die Anordnung bzw. Ausrichtung der gezeigten Lichtmodule in diesen Koordinatensystemen lediglich beispielhaft zu verstehen sind.

Der gezeigte Mikrospiegel **310** befindet sich in der ersten Stellung, wobei weiters ein beispielhafter Lichtstrahl des ersten Leuchtmittels **110** gezeigt ist, welcher von dem sich in der ersten Stellung befindenden Mikrospiegel **310** auf die Projektionsoptik **400** umgelenkt wird.

Die schraffierten Winkelbereiche in **Fig. 2** stellen den Einfalls- bzw. den Ausfallswinkel des von dem Mikrospiegel **310** umgelenkten Lichtstrahls dar, wobei Einfalls- und Ausfallswinkel identisch sind.

**Fig. 3** zeigt eine Ansicht von oben bzw. in Richtung der z-Achse, welches ebenfalls in **Fig. 3** eingezeichnet ist, der Anordnung des Lichtmoduls aus **Fig. 1**, wobei ein exemplarischer Mikrospiegel **310** des optoelektronischen Bauteils **300** in einer Detailansicht dargestellt ist.

Der gezeigte Mikrospiegel **310** befindet sich in der zweiten Stellung, wobei weiters ein beispielhafter Lichtstrahl des ersten Leuchtmittels **110** gezeigt ist, welcher von dem sich in der ersten Stellung befindenden Mikrospiegel **310** auf den Absorber **500** umgelenkt wird.

Die schraffierten Winkelbereiche in **Fig. 3** stellen den Einfalls- bzw. den Ausfallswinkel des von dem Mikrospiegel **310** umgelenkten Lichtstrahls dar, wobei Einfalls- und Ausfallswinkel identisch sind.

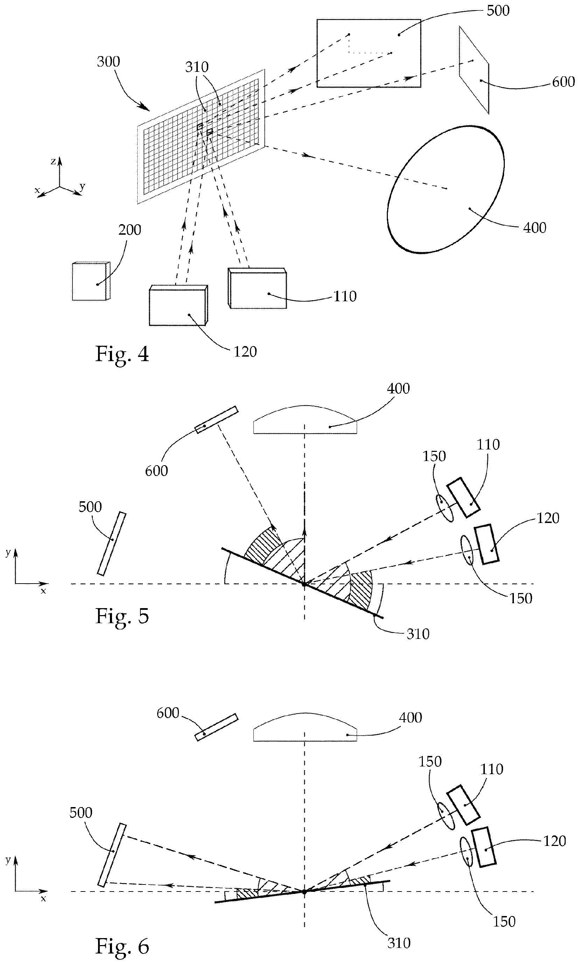

**Fig. 4** zeigt ein erfindungsgemäßes Lichtmodul, wobei dieses Lichtmodul zusätzlich zu dem bereits in **Fig. 1** gezeigten Aufbau ein Sensormittel **600** und ein zweites Leuchtmittel **120** umfasst, wobei die Steuereinrichtung **200** eingerichtet ist, das Sensormittel **600** und das zweite Leuchtmittel **120** anzusteuern, beispielsweise um das zweite Leuchtmittel ein- bzw. auszuschalten.

Das Sensormittel **600** ist in dem in **Fig. 4** gezeigten Beispiel als lichtsensitiver CCD-Sensor ausgebildet, wobei auch andere Ausführungen denkbar sind.

Ferner lenken Mikrospiegel **310**, welche sich in der ersten Stellung befinden, die von dem zweiten Leuchtmittel **120** emittierbaren Lichtstrahlen auf das Sensormittel **600**, und Mikrospiegel **310**, welche sich in der zweiten Stellung befinden, die von dem zweiten Leuchtmittel **120** emittierbaren Lichtstrahlen auf den Absorber **500** um.

Lichtstrahlen des ersten Leuchtmittels **110** werden wie in dem Lichtmodul aus **Fig. 1** durch die entsprechenden Mikrospiegel umgelenkt.

Weiters ist das Sensormittel **600** eingerichtet, die von dem optoelektronischen Bauteil **300** auf das Sensormittel **600** umgelenkten Lichtstrahlen des zweiten Leuchtmittels **120** in Form eines Wertes, beispielsweise einem Helligkeitswert, zu erfassen und diesen Wert an die Steuereinrichtung **200** zu übermitteln, welche Steuereinrichtung **200** den Wert mit einem in einem Speicher gespeicherten, vordefinierten Schwellenwert vergleicht, wobei die Steuereinrichtung **200** ein Einschalten des ersten Leuchtmittels **110** bei Erreichen des vordefinierten Schwellenwertes verhindert oder das erste Leuchtmittel **110** bei Unterschreiten des vordefinierten Schwellenwertes einschaltet.

Es sei angemerkt, dass die Position des Sensormittels **600** in den Figuren beispielhaft zu verstehen ist und beispielsweise auch - gesehen in z- Richtung des eingezeichneten Koordinatensystems in **Fig. 4** - über der Projektionsoptik **400** angeordnet sein kann. Dadurch kann beispielsweise möglichen Platzproblemen in einem Kraftfahrzeugscheinwerfer entgegengewirkt werden.

Es kann beispielsweise auch vorgesehen sein, dass das Sensormittel **600** über oder unter der zumindest einen Projektionsoptik **400** in dem Lichtmodul angeordnet ist.

Die Begriffe "über" und "unter" beziehen sich jeweils auf ein Lichtmodul in einem eingebauten Zustand in einem Kraftfahrzeug.

Dabei spannen das erste Leuchtmittel **110**, die zumindest eine Projektionsoptik **400** und ein Mikrospiegel **310** eine fiktive erste Ebene, und das zweite Leuchtmittel **120**, das Sensormittel **600** und der gleiche Mikrospiegel **310** eine zweite fiktive Ebene auf, wobei die erste Ebene zu der zweiten Ebene verkippt sein kann, wobei die Schnittgerade durch den Mikrospiegel **310** bzw. das optoelektronische Bauteil **300** verläuft. Durch eine derartige Verkippung kann sich der Sensormittel **600** über oder unter der zumindest einen Projektionsoptik **400** befinden.

Es kann auch vorgesehen sein, dass die erste und die zweite Ebene zueinander verkippt und/oder verdreht sind.

Das erste und/oder das zweite Leuchtmittel **110**, **120** können zumindest eine Lichtquelle aufweisen, wobei die zumindest eine Lichtquelle als Leuchtdiode - auch LED genannt - oder als Laserlichtquelle, vorzugsweise eine Laserdiode, mit einem Lichtkonversionselement ausgebildet ist.

Vorzugsweise ist vorgesehen, dass im Fall, dass zwei oder mehr Leuchtdioden vorgesehen sind, jede Leuchtdiode unabhängig von den anderen Leuchtdioden angesteuert werden kann.

Jede Leuchtdiode kann somit unabhängig von den anderen Leuchtdioden einer Lichtquelle ein- und ausgeschaltet werden, und vorzugsweise, wenn es sich um dimmbare Leuchtdioden handelt, auch unabhängig von den anderen Leuchtdioden der Lichtquelle gedimmt werden.

**Fig. 5** und **6** zeigen eine Ansicht von oben bzw. in Richtung der z-Achse, was in **Fig. 5** und **6** durch ein Koordinatensystem eingezeichnet ist, der Anordnung des Lichtmoduls aus **Fig. 4**, wobei ein exemplarischer Mikrospiegel **310** des optoelektronischen Bauteils **300** in einer Detailansicht dargestellt ist.

Der gezeigte Mikrospiegel **310** in **Fig. 5** befindet sich in der ersten Stellung, wobei weiters ein beispielhafter Lichtstrahl des ersten und zweiten Leuchtmittels **110**, **120** gezeigt ist, wobei der von dem ersten Leuchtmittel **110** emittierte Lichtstrahl auf die Projektionsoptik **400** und der von dem zweiten Leuchtmittel **120** emittierte Lichtstrahl auf das Sensormittel **600** umgelenkt wird.

Der gezeigte Mikrospiegel **310** in **Fig. 6** befindet sich in der zweiten Stellung, wobei weiters ein beispielhafter Lichtstrahl des ersten und zweiten Leuchtmittels **110**, **120** gezeigt ist, welche Lichtstrahlen jeweils von dem sich in der zweiten Stellung befindenden Mikrospiegel **310** auf den Absorber **500** umgelenkt werden.

**Fig. 5** und **Fig. 6** zeigen zumindest eine in Hauptabstrahlrichtung des ersten und des zweiten Leuchtmittels **110**, **120** angeordnete Vorsatzoptik **150**, welche eingerichtet ist, die Lichtstrahlen des jeweiligen Leuchtmittels **110**, **120** zu kollimieren.

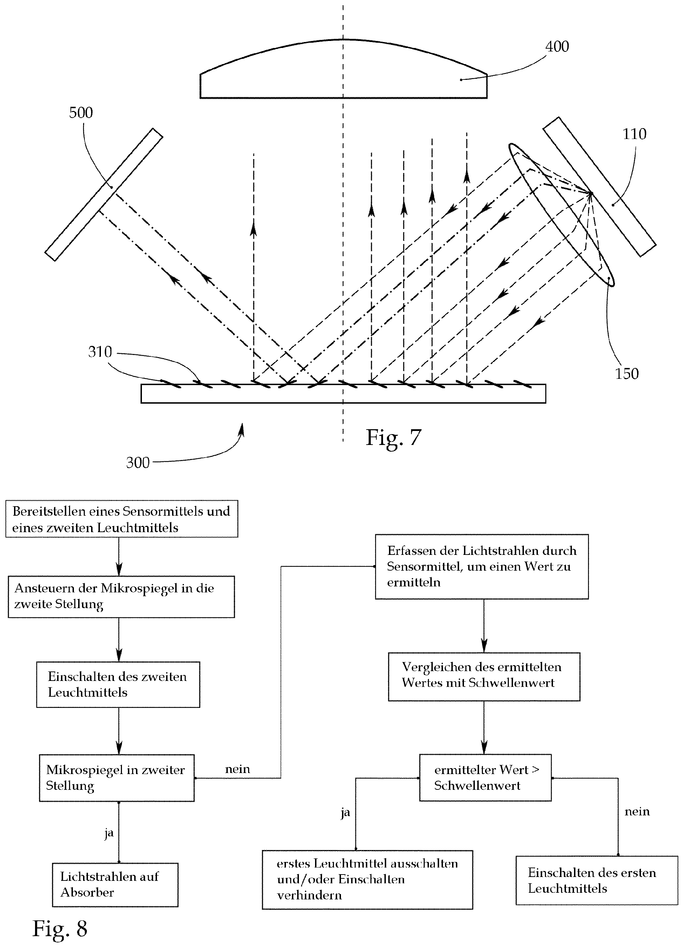

**Fig. 7** zeigt hierzu eine detaillierte Ansicht, wobei nur das erste Leuchtmittel **110** mit einer Vorsatzoptik **150** gezeigt ist, die gezeigten Vorgänge jedoch nur beispielhaft zu verstehen sind. Die Mikrospiegel **310** des optoelektronischen Bauteils **300** befinden sich hierbei in der ersten oder der zweiten Stellung, wobei die von der Vorsatzoptik **150** kollimierten Lichtstrahlen des ersten Leuchtmittels **110** von den Mikrospiegeln **310**, welche sich in der ersten Stellung befinden, auf die Projektionsoptik **400** umgelenkt werden und von den Mikrospiegeln **310**, welche sich in der zweiten Stellung befinden, auf den Absorber **500** umgelenkt werden.

**Fig. 8** zeigt ein Verfahren zur Fehlerüberprüfung eines erfindungsgemäßen Lichtmoduls, wobei in einem ersten Schritt ein Sensormittel **600** und ein zweites Leuchtmittel **120** bereitgestellt werden, wobei die zumindest eine Steuereinrichtung **200** eingerichtet ist, das Sensormittel **600** und das zweite Leuchtmittel **120** anzusteuern.

In einem sogenannten Testmodus werden zunächst die Mikrospiegel **310** mittels der zumindest einen Steuereinrichtung **200** angesteuert, um die Mikrospiegel **310** in die zweite Stellung zu bewegen.

In diesem Testmodus soll im weiteren Verlauf überprüft werden, ob sich alle Mikrospiegel **310** in der zweiten Stellung befinden, wobei steckengebliebene Mikrospiegel **310** auftreten können, die in der ersten Stellung verblieben sind.

Anschließend wird das zweite Leuchtmittel **120** eingeschalten, wobei Mikrospiegel **310**, welche steckengeblieben sind und sich in der ersten Stellung befinden, die von dem zweiten Leuchtmittel **120** emittierten Lichtstrahlen auf das Sensormittel **600** umlenken, und Mikrospiegel **310**, welche sich, wie vorgesehen, in der zweiten Stellung befinden, die von dem zweiten Leuchtmittel **120** emittierten Lichtstrahlen auf den Absorber **500** umlenken.

Weiters werden die Lichtstrahlen des zweiten Leuchtmittels **120**, welche Lichtstrahlen durch sich in der ersten Stellung befindende Mikrospiegel **310** umgelenkt werden, mittels dem Sensormittel **600** in Form eines Wertes, beispielsweise einem Helligkeitswert, erfasst.

Es kann auch vorgesehen sein, dass auch die Anzahl der auftreffenden Photonen erfasst bzw. gezählt werden, wobei auch andere zu erfassende Werte möglich sind.

Dieser Wert wird an die Steuereinrichtung **200** übermittelt, welche Steuereinrichtung **200** den Wert mit einem in einem Speicher gespeicherten, vordefinierten Schwellenwert vergleicht, wobei die Steuereinrichtung **200** ein Einschalten des ersten Leuchtmittels **110** bei Erreichen des vordefinierten Schwellenwertes verhindert oder das erste Leuchtmittel 110 bei Unterschreiten des vordefinierten Schwellenwertes einschaltet.

Ein solcher Schwellenwert entspricht beispielsweise einem gesetzlich vorgegebenen Blendwert, der nicht überschritten werden darf, um bei gegebenenfalls auftretenden, steckengebliebenen Mikrospiegel **310**, die in der ersten Stellung verbleiben und sich durch die Steuereinrichtung **200** nicht mehr korrekt ansteuern lassen, eine Blendung eines Fahrers eines entgegenkommenden bzw. vorausfahrenden Fahrzeugs zu verhindern.

Falls der von dem Sensormittel **600** erfasste Wert den Schwellenwert unterschreitet, wird ein Signal an die Steuereinrichtung **200** durch das Sensormittel **600** übermittelt, wobei das erste Leuchtmittel **110** mittels der Steuereinrichtung **200** eingeschalten wird.

### LISTE DER BEZUGSZEICHEN

- Erstes Leuchtmittel: 110
- Zweites Leuchtmittel: 120
- Vorsatzoptik: 150
- Steuereinrichtung: 200
- Optoelektronisches Bauteil: 300
- Mikrospiegel: 310
- Projektionsoptik: 400
- Absorber: 500
- Sensormittel: 600

## Patentansprüche

1. Lichtmodul für einen Kraftfahrzeugscheinwerfer, welches Lichtmodul zumindest ein in Hauptabstrahlrichtung eines ersten Leuchtmittels (110) angeordnetes optoelektronisches Bauteil (300), welches eine steuerbare Anordnung von mehreren Mikrospiegeln (310) aufweist, welche Mikrospiegel (310) in Form einer zweidimensionalen Matrix mit Zeilen und Spalten angeordnet sind und unabhängig voneinander in eine erste und eine zweite Stellung verschwenkbar sind, umfasst,
wobei Mikrospiegel (310), die sich in der ersten Stellung befinden, Lichtstrahlen, die von dem ersten Leuchtmittel (110) emittiert werden, auf zumindest eine Projektionsoptik (400) umlenken, welche zumindest eine Projektionsoptik (400) eingerichtet ist, eine Lichtverteilung oder einen Teil einer Lichtverteilung zu erzeugen,
und wobei das Lichtmodul ferner zumindest eine Steuereinrichtung (200) aufweist, welche eingerichtet ist, das erste Leuchtmittel (110) und die Mikrospiegel (310) des optoelektronischen Bauteils (300) anzusteuern,
**dadurch gekennzeichnet, dass**
das Lichtmodul ferner ein Sensormittel (600) und ein zweites Leuchtmittel (120) umfasst, wobei die Steuereinrichtung (200) eingerichtet ist, das Sensormittel (600) und das zweite Leuchtmittel (120) anzusteuern,
und wobei Mikrospiegel (310), welche sich in der ersten Stellung befinden, die von dem zweiten Leuchtmittel (120) emittierbaren Lichtstrahlen auf das Sensormittel (600) umlenken,
wobei das Sensormittel (600) eingerichtet ist, die von den Mikrospiegeln (310) auf das Sensormittel (600) umgelenkten Lichtstrahlen des zweiten Leuchtmittels (120) zu erfassen, um einen Wert zu erhalten, und diesen Wert an die Steuereinrichtung (200) zu übermitteln, welche Steuereinrichtung (200) den Wert mit einem in einem Speicher gespeicherten, vordefinierten Schwellenwert vergleicht,
wobei die Steuereinrichtung (200) ein Einschalten des ersten Leuchtmittels (110) bei Erreichen des vordefinierten Schwellenwertes verhindert
oder
das erste Leuchtmittel (110) bei Unterschreiten des vordefinierten Schwellenwertes einschaltet.

2. Lichtmodul nach Anspruch 1, **dadurch gekennzeichnet, dass** Mikrospiegel (310), die sich in der zweiten Stellung befinden, Lichtstrahlen, die von dem ersten Leuchtmittel (110) emittiert werden, auf einen Lichtstrahlen absorbierenden Absorber (500) umlenken.

3. Lichtmodul nach Anspruch 1 oder 2, **dadurch gekennzeichnet, dass** und Mikrospiegel (310), welche sich in der zweiten Stellung befinden, die von dem zweiten Leuchtmittel (120) emittierbaren Lichtstrahlen auf einen Lichtstrahlen absorbierenden Absorber (500) umlenken.

4. Lichtmodul nach einem der Ansprüche 1 bis 3, **dadurch gekennzeichnet, dass** in Hauptabstrahlrichtung des ersten und des zweiten Leuchtmittels (110, 120) je zumindest eine Vorsatzoptik (150) vor dem ersten und dem zweiten Leuchtmittel (110, 120) angeordnet ist, welche eingerichtet ist, die Lichtstrahlen des jeweiligen Leuchtmittels (110, 120) zu kollimieren.

5. Lichtmodul nach einem der Ansprüche 1 bis 4, **dadurch gekennzeichnet, dass** das erste und/oder das zweite Leuchtmittel zumindest eine Lichtquelle aufweisen, wobei die zumindest eine Lichtquelle als LED oder als Laserlichtquelle, vorzugsweise als eine Laserdiode mit einem Lichtkonversionselement, ausgebildet ist.

6. Lichtmodul nach einem der Ansprüche 1 bis 5, **dadurch gekennzeichnet, dass** das optoelektronische Bauteil (300) als DMD ausgebildet ist.

7. Lichtmodul nach einem der Ansprüche 1 bis 6, **dadurch gekennzeichnet, dass** das Sensormittel (600) als lichtsensitiver CCD-Sensor ausgebildet ist.

8. Lichtmodul nach einem der Ansprüche 1 bis 7, **dadurch gekennzeichnet, dass** das Sensormittel (600) über oder unter der zumindest einen Projektionsoptik (400) in dem Lichtmodul angeordnet ist.

9. Kraftfahrzeugscheinwerfer mit zumindest einem Lichtmodul gemäß einem der Ansprüche 1 bis 8.

10. Verfahren zur Fehlerüberprüfung eines Lichtmoduls für einen Kraftfahrzeugscheinwerfer, gemäß einem der Ansprüche 1 bis 8 oder eines Kraftfahrzeugscheinwerfers gemäß Anspruch 9, welches Lichtmodul zumindest ein in Hauptabstrahlrichtung eines ersten Leuchtmittels (110) angeordnetes optoelektronisches Bauteil (300), welches eine steuerbare Anordnung von mehreren Mikrospiegeln (310) aufweist, welche Mikrospiegel (310) in Form einer zweidimensionalen Matrix mit Zeilen und Spalten angeordnet sind und unabhängig voneinander in eine erste und eine zweite Stellung verschwenkbar sind, umfasst,
wobei Mikrospiegel (310), die sich in der ersten Stellung befinden, Lichtstrahlen, die von dem ersten Leuchtmittel (110) emittiert werden, auf zumindest eine Projektionsoptik (400) umlenken, welche zumindest eine Projektionsoptik (400) eingerichtet ist, eine Lichtverteilung oder einen Teil einer Lichtverteilung einer Lichtfunktion zu erzeugen,
und wobei das Lichtmodul ferner zumindest eine Steuereinrichtung (200) aufweist, welche eingerichtet ist, das erste Leuchtmittel (110) und die Mikrospiegel (310) des optoelektronischen Bauteils (300) anzusteuern,
**gekennzeichnet durch** folgende Schritte:
a) Bereitstellen eines Sensormittels (600) und eines zweiten Leuchtmittels (120), wobei die zumindest eine Steuereinrichtung (200) eingerichtet ist, das Sensormittel (600) und das zweite Leuchtmittel (120) anzusteuern,
b) Ansteuern der Mikrospiegel (310) mittels der zumindest einen Steuereinrichtung (200), um die Mikrospiegel (310) in die zweite Stellung zu bewegen,
c) Einschalten des zweiten Leuchtmittels (120), wobei Mikrospiegel (310), welche sich in der ersten Stellung befinden, die von dem zweiten Leuchtmittel (120) emittierten Lichtstrahlen auf das Sensormittel (600) umlenken,
d) Erfassen der Lichtstrahlen des zweiten Leuchtmittels (120), welche Lichtstrahlen durch sich in der ersten Stellung befindende Mikrospiegel (310) umgelenkt werden, mittels dem Sensormittel (600), um einen Wert zu erhalten, beispielsweise einen Helligkeitswert,
e) Übermitteln des von dem Sensormittel (600) erfassten Wertes an die Steuereinrichtung (200), wobei die Steuereinrichtung (200) den übermittelten Wert mit einem in einem Speicher gespeicherten, vordefinierten Schwellenwert vergleicht,
f) Einschalten des ersten Leuchtmittels (110) mittels der Steuereinrichtung (200) bei Unterschreiten des vordefinierten Schwellenwertes
oder
g) Verhindern des Einschaltens des ersten Leuchtmittels (110) durch die Steuereinrichtung (200) bei Erreichen des vordefinierten Schwellenwertes.

11. Verfahren nach Anspruch 10, **dadurch gekennzeichnet, dass** Mikrospiegel (310), die sich in der zweiten Stellung befinden, Lichtstrahlen, die von dem ersten Leuchtmittel (110) emittiert werden, auf einen Lichtstrahlen absorbierenden Absorber (500) umlenken.

12. Verfahren nach Anspruch 10 oder 11, **dadurch gekennzeichnet, dass** in Schritt c) Mikrospiegel (310), welche sich in der zweiten Stellung befinden, die von dem zweiten Leuchtmittel (120) emittierten Lichtstrahlen auf den Absorber (500) umlenken.
